# EUROPEAN PATENT APPLICATION

(11) **EP 2 787 725 A1**
(43) Date of publication of application: **08.10.2014**
(21) Application number: 12852817.1
(22) Date of filing: 14.09.2012
(51) Int. Cl.: H04N 7/173, G06F 21/60, H04H 60/14

(54) **RECEPTION DEVICE, PROGRAM, AND RECEPTION METHOD**

(30) Priority: 30.11.2011 JP 2011262010
(71) Applicant: Nippon Hoso Kyokai, Tokyo 150-8001 (JP)
(72) Inventor: OHMATA, Hisayuki, Tokyo 157-8510 (JP); OHTAKE, Go, Tokyo 157-8510 (JP); MAJIMA, Keigo, Tokyo 157-8510 (JP); OTSUKI, Kazuhiro, Tokyo 157-8510 (JP); HIRONAKA, Yuki, Tokyo 157-8510 (JP); ENDO, Yosuke, Tokyo 157-8510 (JP)
(74) Representative: Tischner, Oliver
(86) International application number: PCT/JP2012/073657
(87) International publication number: WO 2013/080632

(57) **Abstract**

A reception device includes an access control unit configured to determine whether access to the application programming interface is permitted based on a determination according to the type stored in the application storage unit to correspond to the application identification information set in the call instruction. In addition, the reception device includes a web server unit configured to receive the call instruction from the browser unit, inquire of the access control unit about whether access to the application programming interface is permitted, and control the call instruction according to a result of a determination which is made by the access control unit in response to the inquiry.

## Description

### [Technical Field]

The present invention relates to a reception device, a program, and a reception method.

Priority is claimed on Japanese Patent application No. 2011-262010, filed November 30, 2011, the content of which is incorporated herein by reference.

### [Background Art]

With the recent development of digital broadcasting and broadband communication, realization of broadcasting-communication integrated services, including European HbbTV (Hybrid Broadcast Broadband TV), has been studied and developed. Further, an enhanced television called a "smart television" enabling various communication services to be utilized using applications, as well as having a broadcast reception function, has begun to spread. Each user adds applications selected from an application list distributed via a portal site or the like to such an enhanced television enabling the user to use services other than the broadcast. Various communication services can be utilized when the added applications are executed by the enhanced television.

An API (Application Programming Interface) may be provided in a platform introducing applications to expand services as described above or a device constituting the platform as an interface for enabling functions of the platform or the device to be used from the applications. It is possible to simplify design and coding tasks for software for enabling the functions of the platform or the device to be handled from the application by providing such an API. Therefore, it is possible to efficiently produce applications. Such a concept has also been considered in a receiver intended for broadcasting-communication integration. For example, a structure which easily acquires information related to broadcasts through communication and uses the information by providing an API between a data broadcasting browser and a communication function of a receiver is disclosed in Patent Document 1.

### [Prior Art Document]

### [Patent Document]

[Patent Document 1] Japanese Unexamined Patent Application, First Publication No. 2010-148141

### [Summary of Invention]

### [Problem to Be Solved by the Invention]

In Patent Document 1, a task for producing applications operating on the receiver is made efficient by providing APIs for functions of the receiver, opening the APIs to the public, and permitting access to the APIs. Further, a variety of applications are obtained by increasing the number of APIs. However, when the access to the APIs is permitted without any restriction, there is an increasing risk of the functions of the receiver or data or contents processed in the receiver being fraudulently used. For example, when access to an API which reads a video received through broadcasting by the receiver is permitted without any restriction, a risk of a copyright-infringing application which acquires the video using the API, copies the acquired video, and distributes the video on the Internet being produced is also considered. On the other hand, when the risk is estimated to be high and types of APIs to which access is permitted are limited, a variety of applications are assumed to be lost. Thus, when control of permission or prohibition of access to the APIs of the receiver is only performed equally for all applications, there is a problem in that a variety of applications and a risk for services cannot be flexibly balanced when both are considered.

The present invention has been made in consideration of such circumstances and provides a reception device, a program, and a reception method capable of limiting APIs whose use is permitted according to applications.

### [Means to Solve the Problem]

[1] A first aspect of the present invention is a reception device including: a functional unit configured to perform at least one of control of reception of a broadcast signal and process on a received broadcast signal; an application storage unit which stores an application described using a describing language for web contents, application identification information which identifies the application, and a type of application in association; a browser unit configured to read the application from the application storage unit, execute the application, and output, through a protocol used between a web server and a client, a call instruction for an application programming interface in which the application identification information of the application and application programming interface identification information for identifying the application programming interface have been set when call of the application programming interface for using a function of the functional unit has been described in the executed application; an access control unit configured to determine whether access to the application programming interface is permitted based on a determination according to the type stored in the application storage unit to correspond to the application identification information set in the call instruction; and a web server unit configured to receive the call instruction from the browser unit, inquire of the access control unit about whether access to the application programming interface is permitted, and control the call instruction according to a result of a determination which is made by the access control unit in response to the inquiry.

According to this aspect, the browser unit of the reception device executes the application described using the describing language for web contents, and outputs the API call instruction using a protocol used between a web server and a client when this executed application attempts to access the API for use of the function provided in the reception device. The web server unit controls the API call instruction from the executed application according to whether or not the API can be accessed, which the access control unit determines according to a type of application.

Accordingly, the reception device executes the application described using the same describing language as that for general web contents. Also, the reception device can control a range of the API available to the application which is being executed, in units of types of applications such as a formal application or an application which is not formal but authorized.
[2] In the first aspect of the present invention, the access control unit may be configured to refuse the access to the application programming interface when location information set as a call source in the call instruction indicates a device other than the reception device.
   Thus, when the API provided by the reception device is called from another device, such as a tablet terminal or a portable terminal, the reception device can refuse the call while providing a server function to the other device.
[3] In the first aspect of the present invention, the reception device may include: a start-up application management list storage unit which stores application identification information and a type of an application which has started up; and a start-up application management unit configured to write the application identification information and the type of the application which has started up in the browser unit to the start-up application management list storage unit, wherein the access control unit may be configured to refuse the access to the application programming interface when the application identification information set in the call instruction has not been stored in the start-up application management list storage unit.
   According to this aspect, the access control unit of the reception device refuses access to the API from an application other than the application which has started up in the browser unit.
   Thus, when the API is called from another device such as a tablet terminal or a portable terminal or when the API is called from the application using falsified application identification information, the reception device can refuse the call.
[4] In the first aspect of the present invention, the reception device may include: a video display unit configured to display a video; and a confirmation message output unit configured to cause the video display unit to display a message instructing to input whether use of the application programming interface is permitted when the application programming interface requires user permission, wherein the access control unit may be configured to refuse the access to the application programming interface when an indication indicating that the use is not permitted is input in response to the message.
   According to this aspect, when the API called from the application is an API requiring user permission, the access control unit of the reception device determines whether call of the API can be allowed based on an instruction from the user.
   Thus, for an API for using personal information such as referencing information of a currently received channel or an API for performing control of the functional unit, the reception device can perform control to permit the call of the API only when there is permission of the user.
[5] In the first aspect of the present invention, the reception device may include: an application manager unit configured to acquire the application; and a signature verification unit configured to verify a signature set in the application acquired by the application manager unit, and determine the type based on whether the verification is successful and based on the application identification information set in the application, wherein the application manager unit may be configured to write the application identification information and the type determined by the signature verification unit to the application storage unit in association with the acquired application.
   According to this aspect, the reception device determines the type based on the signature or the application identification information described within the application, and stores the determined type and the application in association with each other.
   Thus, the reception device can acquire the application from the outside as necessary and determine a type of acquired application from a description within the application.
   Accordingly, the reception device can verify the signature to determine the type without inquiry to another device or the like after acquiring the application, and limit an available range of the API based on the determined type, thereby improving security.
[6] In the first aspect of the present invention, the describing language may be Hypertext Markup Language, and the protocol may be Hypertext Transfer Protocol.
   According to this aspect, the browser unit of the reception device executes the application described using HTML (Hypertext Markup Language), and the web server unit transmits or receives data through HTTP (Hypertext Transfer Protocol).
   Thus, since the application can be described using the generally widely used HLML, it becomes easy to produce applications. Further, the web server unit of the reception device can provide a server function to another device through HTTP which is generally widely known on the web.
[7] A second aspect of the present invention is a program which causes a computer used in a reception device including a functional unit which performs at least one of control of reception of a broadcast signal and process on the received broadcast signal to function as: an application storage unit which stores an application described using a describing language for web contents, application identification information which identifies the application, and a type of application in association; a browser unit which configured to read the application from the application storage unit, execute the application, and output, through a protocol used between a web server and a client, a call instruction for an application programming interface in which the application identification information of the application and application programming interface identification information for identifying the application programming interface have been set when call of the application programming interface for using a function of the functional unit has been described in the executed application; an access control unit configured to determine whether access to the application programming interface is permitted based on a determination according to the type stored in the application storage unit to correspond to the application identification information set in the call instruction; and a web server unit configured to receive the call instruction from the browser unit, inquire of the access control unit about whether access to the application programming interface is permitted, and control the call instruction according to a result of a determination which is made by the access control unit in response to the inquiry.
[8] A third aspect of the present invention is a reception method including: performing at least one of control of reception of a broadcast signal and process on a received broadcast signal; storing an application described using a describing language for web contents, application identification information which identifies the application, and a type of application in association; reading the application from the application storage unit, executing the application, and outputting, through a protocol used between a web server and a client, a call instruction for an application programming interface in which the application identification information of the application and application programming interface identification information for identifying the application programming interface have been set when call of the application programming interface for using a function of the functional unit has been described in the executed application; determining whether access to the application programming interface is permitted based on a determination according to the type stored in the application storage unit to correspond to the application identification information set in the call instruction; and receiving the call instruction, inquiring about whether access to the application programming interface is permitted, and controlling the call instruction according to a result of a determination corresponding to the inquiry.

### [Effect of the Invention]

According to the present invention, it is possible to limit an API whose use is permitted according to applications.

### [Brief Description of the Drawings]

Fig. 1 is a block diagram illustrating a configuration of a reception device according to one embodiment of the present invention.
Fig. 2 is a block diagram illustrating a detailed configuration of an access control unit according to the embodiment.
Fig. 3 is a diagram illustrating an example of an HTML file in which an application is described according to the embodiment.
Fig. 4 is a diagram illustrating is a diagram illustrating stored contents of an application storage unit according to the embodiment.
Fig. 5 is a diagram illustrating an example of start-up application management list data according to the embodiment.
Fig. 6 is a diagram illustrating an example of API access list data according to the embodiment.
Fig. 7 is a diagram illustrating an example of user permission API list data according to the embodiment.
Fig. 8 is a diagram illustrating a process flow of an application acquisition process in the reception device according to the embodiment.
Fig. 9 is a diagram illustrating a process flow of an application execution process in the reception device according to the embodiment.
Fig. 10 is a diagram illustrating a process flow of an API access control process in the reception device according to the embodiment.
Fig. 11 is a diagram illustrating a process flow of an API access permission determination process in the reception device according to the embodiment.

### [Embodiment for Carrying Out the Invention]

Hereinafter, an embodiment of the present invention will be described in detail with reference to the accompanying drawings.

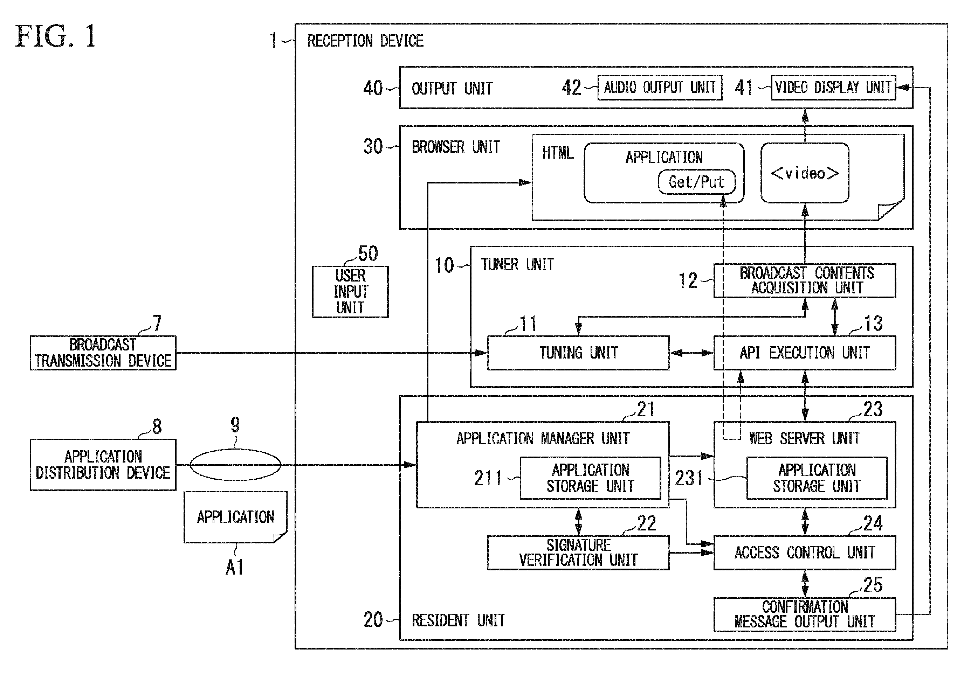

Fig. 1 is a block diagram illustrating a configuration of a reception device 1 according to one embodiment of the present invention. Only functional blocks related to this embodiment are extracted and shown in Fig. 1.

The reception device 1, for example, is a device such as a television, a set top box, a personal computer, or a portable terminal, and is held by a user who is a viewer. The reception device 1 receives broadcast waves broadcast from a broadcast transmission device 7, and performs transmission or reception of data to or from an application distribution device 8 over a communication network 9 such as an interface net. While only one broadcast transmission device 7 and one application distribution device 8 are illustrated in Fig. 1, a plurality of broadcast transmission devices and a plurality of application distribution devices may be provided.

The broadcast transmission device 7 is a broadcasting facility of a broadcast provider, and multiplexes, for example, video, audio and data broadcasts, modulates the broadcasts, and transmits the broadcasts as broadcast waves. The application distribution device 8 is a computer server which distributes an application program file (hereinafter referred to as an "application") executed on the reception device 1 to the reception device 1 over the communication network 9.

The reception device 1 executes an application A1 which is distributed through communication from the application distribution device 8 over the communication network 9. The application is described using a describing language for web contents, and includes, for example, an HTML (Hypertext Markup Language) file, and a file such as JAVA (registered trademark) script or CSS (Cascading Style Sheets) linked to the HTML file. The application, for example, acquires contents data from a contents distribution device (not illustrated) on the communication network 9 and outputs a video or an audio of the acquired contents data together with a video or an audio of a broadcast program. A user can use a broadcasting-communication integrated service by executing such an application. Further, the application may not display the contents data acquired over the communication network 9. For example, the application may display contents data described in the application in advance.

The application is produced by a broadcast provider, a service provider, or an individual. Meanwhile, the reception device 1 provides an API (Application Programming Interface) for each of a plurality of functions within this reception device 1. API access for the application to use the API is executed by the reception device 1 executing the application. Accordingly, the application may use a function of the reception device 1 or a function of handling information which is a processing target within the reception device 1. Further, the reception device 1 performs control to make an available range of the API different according to types of applications.

In this embodiment, a case in which the types of applications are three types of application A, application B and application C will be described. For example, application A is an application authorized as an official application by a third party or the like and permitted to start up on the reception device 1, and can use all APIs. Application B is not an official application, but is an application permitted to start up on the reception device 1 by the third party or the like, and can use some predetermined APIs. Application C is an unauthorized application, and cannot start up on the reception device 1. Therefore, application C cannot use any of the APIs.

The reception device 1 includes a tuner unit 10, a resident unit 20, a browser unit 30, an output unit 40, and a user input unit 50, as illustrated in Fig. 1.

The output unit 40 includes a video display unit 41 and an audio output unit 42. The video display unit 41 is a general display and displays video data of broadcast contents data (referred to as "broadcast contents"). The audio output unit 42 is a general speaker and outputs audio data of the broadcast contents.

The user input unit 50 is an interface which receives a manipulation by the user. The user input unit 50, for example, receives data which is input by a remote controller, a keyboard, a mouse, a mobile phone, a tablet terminal, or the like.

The tuner unit 10 includes a tuning unit 11, a broadcast contents acquisition unit 12, and an API execution unit 13.

The tuning unit 11 selects a channel to be received according to a user manipulation received by the user input unit 50 and demodulates a broadcast signal of the selected channel.

The broadcast contents acquisition unit 12 acquires broadcast contents constituting a broadcast program, such as video data, audio data, a data broadcast, subtitle data, and PSI/SI (Program Specific Information/Service Information) from an MPEG (Moving Picture Experts Group)-2 TS (Transport Stream) signal included in the broadcast signal demodulated by the tuning unit 11.

The API execution unit 13 executes an API which is provided for a functional unit within the reception device 1. An API which controls a functional unit which performs control for reception of the broadcast signal or a functional unit which performs a process for the received broadcast signal, or acquires an operating status is included in the API provided by the reception device 1. Further, an API which refers to data stored in the reception device 1 is included in the API provided by the reception device 1. For example, an API provided by the tuning unit 11 includes an API which refers to a selected channel or an API which controls tuning of the channel. An API provided by the broadcast contents acquisition unit 12 includes an API which refers to broadcast contents. Further, there may be an API which acquires information input by the user from the user input unit 50.

The browser unit 30 provides an HTML web browser which is an execution environment for applications. The browser unit 30 causes the video display unit 41 to display a video using a template which displays only a display screen of the broadcast contents or a template which simultaneously displays a display screen of the broadcast contents and the applications. The template is stored in the application manager unit 21 and described using HTML or a CSS. Further, the browser unit 30 receives control of start-up or stop of the application from the application manager unit 21. When start-up is instructed, the browser unit 30 reads an application from the application storage unit 211 of the application manager unit 21 or the application storage unit 231 of the web server unit 23, and executes the application. The browser unit 30 acquires the contents data from the contents distribution device (not illustrated) over the communication network 9 and displays the contents data as an application display screen or accesses the API within the reception device 1 according to a description of the application by executing the application. When the API is accessed from the application, the browser unit 30 outputs an API call instruction to the web server unit 23 through HTTP (Hypertext Transfer Protocol) which is a protocol used between a web server and a client.

The resident unit 20 includes an application manager unit 21, a signature verification unit 22, the web server unit 23, an access control unit 24, and a confirmation message output unit 25.

The application manager unit 21 manages the application distributed through broadcasting or communication and controls start-up or stop of the application. When the application manager unit 21 acquires the application from the application distribution device 8, the application manager unit 21 notifies the signature verification unit 22 of the acquired application, and receives the type of the application and an application ID (application identification information), which is identification information which identifies the application, as a verification result of the application. The application manager unit 21 writes the application, the type of application, and the application ID to the application storage unit 211 or the application storage unit 231 in association. Further, the application manager unit 21 notifies the access control unit 24 of the type and the application ID of a started or stopped application.

The application storage unit 211 stores the application of application A or a template used by the browser unit 30.

The signature verification unit 22 manages a verification key, verifies a signature code (hereinafter referred to as a "signature") given to the application, which is input from the application manager unit 21, using the verification key to perform detection of falsification and acquisition of the application ID, and determines the type of application based on the acquired application ID. The signature verification unit 22 notifies the application manager unit 21 of the type of application, and the application ID acquired from the application.

The web server unit 23 has a function of a general web server, and transmits or receives data to or from the browser unit 30 or an external device through HTTP. The web server unit 23 is an interface via which the API is accessed from the application executed in the browser unit 30. When the web server unit 23 receives the API call instruction which is an HTTP request for executing the API from the browser unit 30, the web server unit 23 inquires of the access control unit 24 about whether access to the API is permitted. When the web server unit 23 receives permission of the API access from the access control unit 24, the web server unit 23 instructs the API execution unit 13 to execute the API to which access is requested by the API call instruction received from the browser unit 30.

The application storage unit 231 stores the applications of application B and application C.

The access control unit 24 determines whether the API access from the application executed by the browser unit 30 is permitted. When the application executed by the browser unit 30 calls the API via the web server unit 23 by transmitting the API call instruction, the access control unit 24 determines whether the access to the API is permitted based on an output source of an HTTP request (the API call instruction), the type of application, permission of the user, or the like, and notifies the web server unit 23 of a determination result.

The confirmation message output unit 25 causes the video display unit 41 to display a GUI (graphic user interface) for obtaining use permission of the user at the time of API access from the application in response to an instruction from the access control unit 24. The confirmation message output unit 25 notifies the access control unit 24 of a selection result indicating whether the user permits the access, which is input by the user input unit 50.

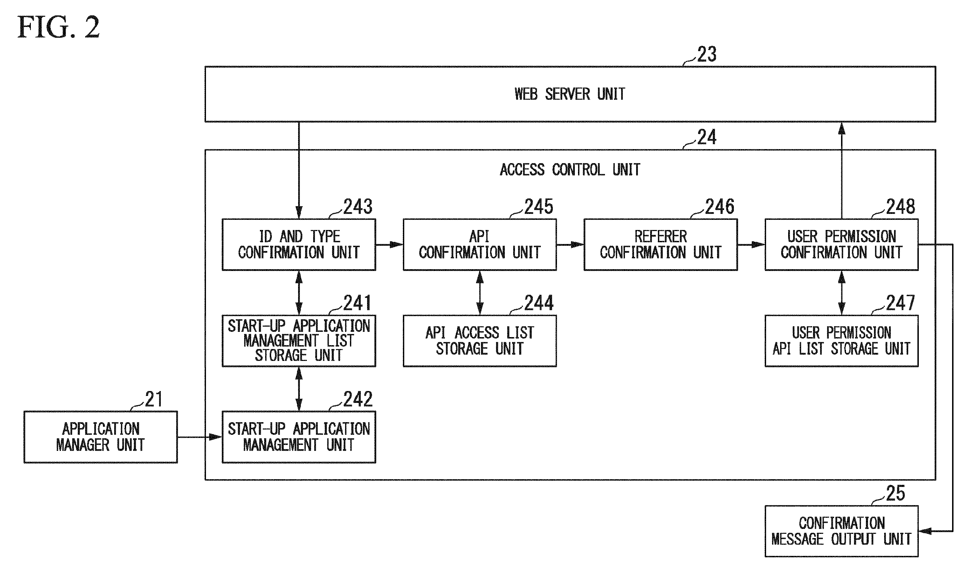

Fig. 2 is a block diagram illustrating a detailed configuration of the access control unit 24.

The access control unit 24 includes a start-up application management list storage unit 241, a start-up application management unit 242, an ID and type confirmation unit 243, an API access list storage unit 244, an API confirmation unit 245, a referer confirmation unit 246, a user permission API list storage unit 247, and a user permission confirmation unit 248, as illustrated in Fig. 2.

The start-up application management list storage unit 241 stores start-up application management list data in which an application ID and a type of an application which has started up have been described. The start-up application management unit 242 receives a notification of the application ID and the type of application which has started up or stopped from the application manager unit 21, and updates the start-up application management list data.

The ID and type confirmation unit 243 matches the application ID included as a variable of the API call instruction and described contents of the start-up application management list data stored in the start-up application management list storage unit 241 to determine whether the acquired application ID is an ID of the application which has started up. When the ID and type confirmation unit 243 determines that the application ID is an application ID of the application which has started up, the ID and type confirmation unit 243 reads the type corresponding to the application ID from the start-up application management list data. On the other hand, when the ID and type confirmation unit 243 determines that the application ID is not an application ID of the application which has started up, the ID and type confirmation unit 243 determines that the application is unauthorized or defective, and refuses the access to the API.

The API access list storage unit 244 stores API access list data indicating a list of the APIs available (or unavailable) to respective types of applications. The API confirmation unit 245 matches described contents of the API access list data stored in the API access list storage unit 244 based on the type acquired by the ID and type confirmation unit 243 and the API which is an access destination, and determines whether the access to the API called by the application is permitted.

The referer confirmation unit 246 determines a location from which the API has been accessed using a value of the referer described in a header of the HTTP received as the API call instruction.

This referer is location information indicating a call source of the API call instruction. When the referer confirmation unit 246 determines that the access is not the access from the inside of the reception device 1, the referer confirmation unit 246 determines that the access is unauthorized and refuses the access to the API.

The user permission API list storage unit 247 stores user permission API list data which describes APIs requiring use permission of the user. The user permission confirmation unit 248 determines whether an API which is an access destination requires permission of the user based on described contents of the user permission API list data. When the permission of the user is required, the user permission confirmation unit 248 instructs the confirmation message output unit 25 to output a GUI for asking the user for use permission, and receives an input of a result of permission or refusal of the user. When the refusal is input, the user permission confirmation unit 248 refuses the access to the API.

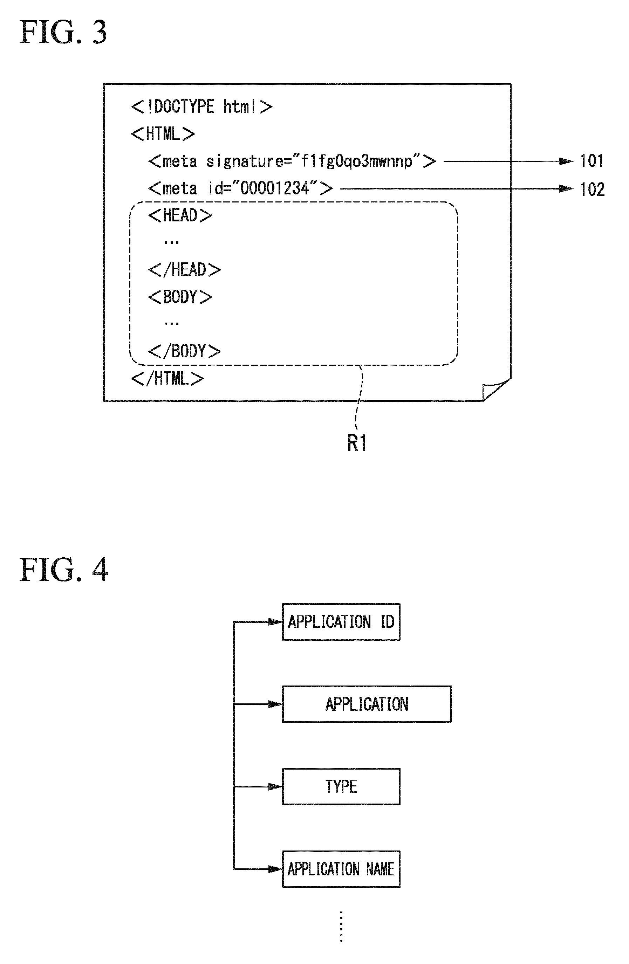

Fig. 3 is a diagram illustrating an example of an HTML file in which an application has been described.

In the HTML file in which an application has been described, a header is described between a tag <HEAD> and a tag </HEAD>, and an application program is described between a tag <BODY> and a tag </BODY>, as illustrated in Fig. 3. Parts between the tag <HEAD> and the tag </HEAD> and between the tag <BODY> and the tag </BODY> are targets of signature. A signature 101 generated from this signature target part R1 is described in the HTML file as a value of a signature type of meta tag. Further, an application ID • 102 is described as a value of an id type of meta tag. Further, for the application ID, a range used for application A and a range used for application B have been determined in advance. Further, the application name is described in tag Title between the tag <HEAD> and the tag </HEAD>.

As described above, since the signature is described within the application, it is not necessary to manage the application and the signature as separate data, and even when respective applications cooperatively operate, verification of the applications can be individually performed. Further, since the signature and the application ID are described in the meta tag, the signature and the application ID are not displayed on a screen.

Further, use of the application ID written to the meta tag as an argument of the API call instruction has been described in the application program in advance.

Fig. 4 is a diagram illustrating stored contents of the application storage unit 211 and the application storage unit 231. The application, the type, the application ID, and the application name are stored in association in the application storage unit 211 and the application storage unit 231, as illustrated in Fig. 4. Further, since only an application whose type is application A is stored in the application storage unit 211, the type may not be stored.

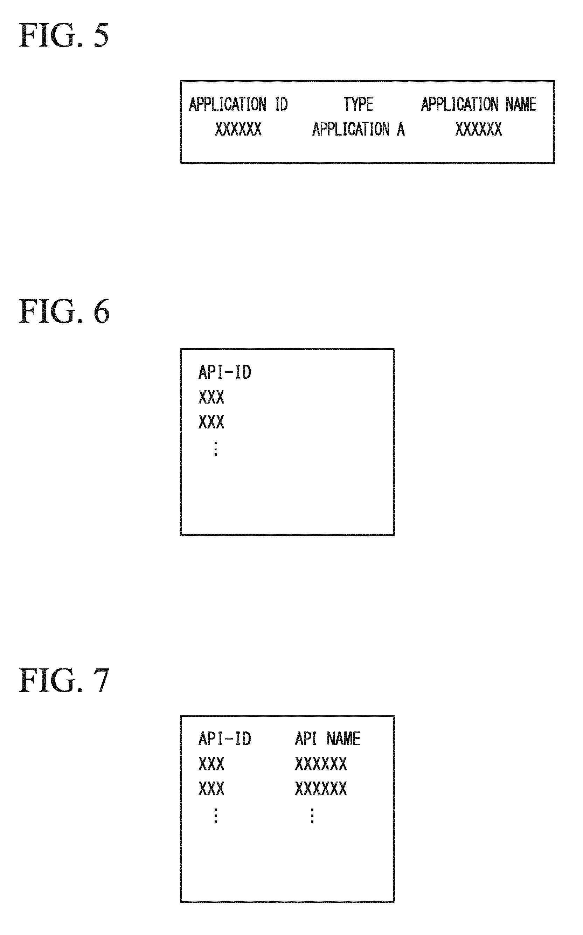

Fig. 5 is a diagram illustrating an example of the start-up application management list data stored in the start-up application management list storage unit 241. The application ID, the type, and the application name of an application which has started up are described in the start-up application management list data, as illustrated in Fig. 5.

Fig. 6 is a diagram illustrating an example of the API access list data stored in the API access list storage unit 244. For an application whose type is application A, access to all APIs is permitted, and for an application whose type is application C, the access to all APIs is prohibited. Therefore, an API-ID (API identification information) of the API accessible to only application B is described in the API access list data illustrated in Fig. 6. The API-ID is identification information which uniquely identifies the API.

Fig. 7 is a diagram illustrating user permission API list data stored in the user permission API list storage unit 247. An API-ID and an API name of an API requiring permission of a user are described in the user permission API list data, as illustrated in Fig. 7.

Next, an operation of this embodiment will be described.

When an application authorization organization such as a broadcast provider or a third party authorizes an application produced by a broadcasting station or a service provider, the application authorization organization gives a unique application ID in a range dependent on a type of the authorized application. Further, if the application authorization organization generates a signature key from the application ID, the application authorization organization generates a signature from a signature target portion of the application using the signature key. The third party writes the application ID and the signature to a meta tag of the application. The application with the application ID and the signature is registered in the application distribution device 8.

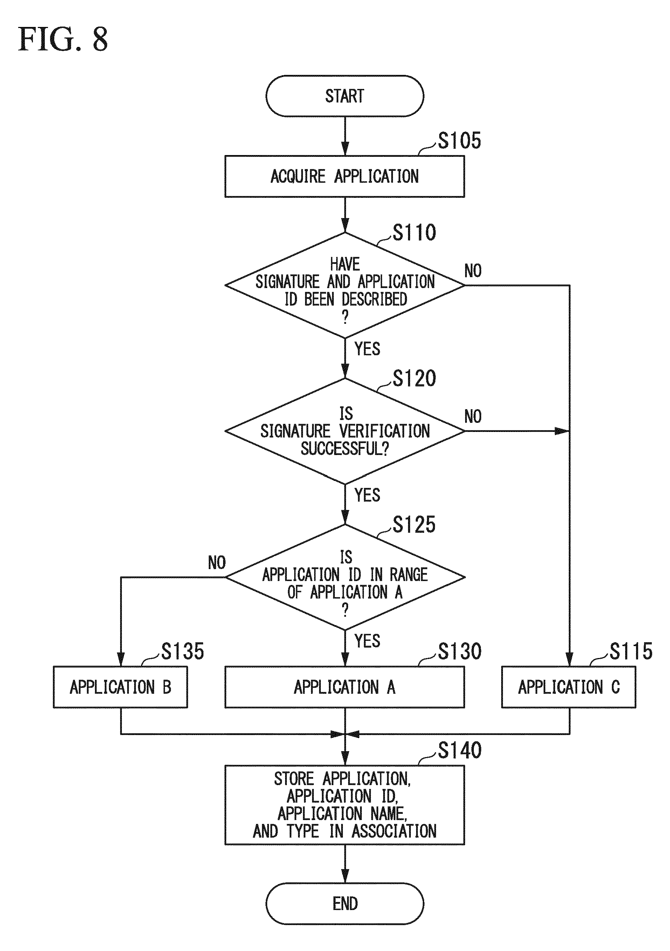

Fig. 8 is a diagram illustrating a process flow of an application acquisition process in the reception device 1.

First, an application acquisition instruction is input by the user input unit 50 of the reception device 1. Alternatively, the application manager unit 21 separates the application acquisition instruction from an AIT (Application Information Table) included in the broadcast signal demodulated by the tuning unit 11. Location information indicating a storage place of the application is included in the application acquisition instruction. The location information is indicated by, for example, a URL (Universal Resource Locator). Further, a start-up instruction for an application not yet acquired by the reception device 1 also is the application acquisition instruction.

When the application manager unit 21 acquires the location information set in the application acquisition instruction, the application manager unit 21 transmits an HTTP request to the application distribution device 8 with a destination being a storage place indicated by the location information to request acquisition of the application. The application distribution device 8 distributes an application corresponding to the location information to the reception device 1 (step S105).

The application manager unit 21 of the reception device 1 outputs the application received from the application distribution device 8 to the signature verification unit 22. The signature verification unit 22 determines whether a signature and an application ID are described in the application (step S110).

When the signature verification unit 22 determines that the signature or the application ID is not described (step S110: NO), the signature verification unit 22 determines that the type is application C (step S115).

When the signature verification unit 22 determines that the signature and the application ID have been described (step S115: YES), the signature verification unit 22 executes signature verification using the application ID and the managed verification key, for the signature target portion and the signature of the application. The signature verification unit 22 matches the generated signature and the signature described in the application to perform the signature verification. When the signature verification fails (step S120: NO), the signature verification unit 22 determines that the application has been falsified and determines that the type is application C (step S115). Further, a signature scheme is not limited to the method shown herein.

When the signature verification is successful (step S120: YES), the signature verification unit 22 determines whether the application ID is in the range of application A (step S125). When the signature verification unit 22 determines that the application ID is in the range of application A (step S125: YES), the signature verification unit 22 determines that the type is application A (step S130), and when the signature verification unit 22 determines that the application ID is not in the range of application A (step S125: NO), the signature verification unit 22 determines that the type is application B (step S135).

After step S115, S130 or S135, the signature verification unit 22 notifies the application manager unit 21 of the application ID and the application name read from the application, and the determined type. When the type input from the signature verification unit 22 is application A, the application manager unit 21 writes the application, the application ID, the application name, and the type to the application storage unit 211 in association. On the other hand, when the type is application B or application C, the application manager unit 21 writes the application, the application ID, the application name, and the type to the application storage unit 231 in association (step S140).

Further, when the application is distributed through the broadcast signal, the application manager unit 21 acquires the application from the broadcast signal and performs the process from step S110.

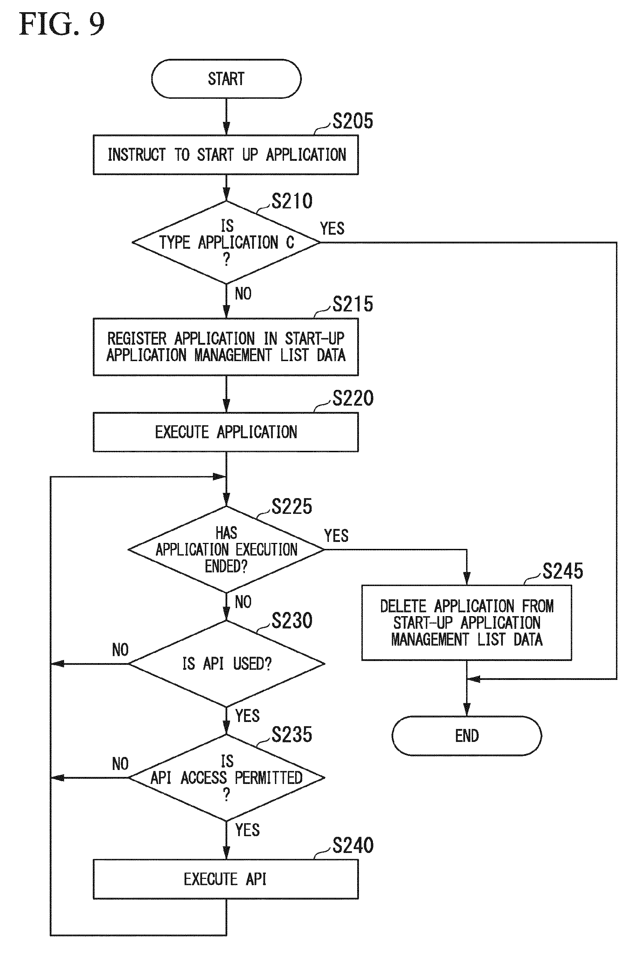

Fig. 9 is a diagram illustrating a process flow of the application execution process in the reception device 1.

First, an application start-up instruction is input to the application manager unit 21 by a user manipulation or an instruction in the broadcast signal (step S205).

For example, the user input unit 50 receives information indicating an application which is a start-up target input by the user manipulation. The application manager unit 21 reads the application ID, the type and the application name stored in association with the application which is a start-up target indicated by the information input by the user input unit 50 from the application storage unit 211 or the application storage unit 231.

Alternatively, the application manager unit 21 acquires the application ID of the application which is a start-up target from the broadcast signal demodulated by the tuning unit 11. The application manager unit 21 reads the type and the application name stored in association with the acquired application ID from the application storage unit 211 or the application storage unit 231.

When the application manager unit 21 determines that the read type indicates application C (step S210: YES), the application manager unit 21 ends without starting up the application.

When the application manager unit 21 determines that the type indicates application A or application B (step S210: NO), the application manager unit 21 notifies the access control unit 24 of the application ID, the type, and the application name. The start-up application management unit 242 of the access control unit 24 writes the application ID, the type and the application name input from the application manager unit 21 to the start-up application management list data stored in the start-up application management list storage unit 241 (step S215).

Subsequently, the application manager unit 21 outputs, to the browser unit 30, an application start-up request in which location information indicating a storage place of the application which is a start-up target has been set. The storage place is expressed by, for example, a URL (Universal Resource Locator). When the browser unit 30 receives the application start-up request, the browser unit 30 reads the application stored in the storage place indicated by the location information from the application storage unit 211 or the application storage unit 231, and executes the application (step S220).

When the execution of the application continues (step S225: NO), the browser unit 30 determines whether the executed application uses the API (step S230). When the browser unit 30 determines that the executed application does not use the API (does not access the API) (step S230: NO), the browser unit 30 repeats the process from step S225. On the other hand, when the browser unit 30 determines that the executed application uses the API (accesses the API) (step S230: YES), the browser unit 30 outputs the API call instruction to the web server unit 23 according to a description of the HTML file of the application.

The web server unit 23 inquires of the access control unit 24 about whether the access of the API is permitted, and the access control unit 24 determines whether the API access is permitted (step S235). When the access control unit 24 determines that the API access is permitted (step S235: YES), the web server unit 23 notifies the API execution unit 13 of the API-ID to instruct start-up. The API execution unit 13 starts up the API identified by the API-ID (step S240). Accordingly, the API is executed and the application can use the API. The reception device 1 repeats the process from step S225.

On the other hand, when the access control unit 24 determines the API access is refused (step S235: NO), the web server unit 23 returns Security Exception to the application without executing the API, and repeats the process from step S225.

When the execution of the application ends (step S225: YES), the browser unit 30 outputs an execution end notification for the application. When the application manager unit 21 receives the execution end notification, the application manager unit 21 notifies the access control unit 24 of the application ID of the application whose execution has ended. The start-up application management unit 242 of the access control unit 24 deletes the application ID input from the application manager unit 21, and the type and the application name stored in association with this application ID from the start-up application management list data stored in the start-up application management list storage unit 241 (step S245).

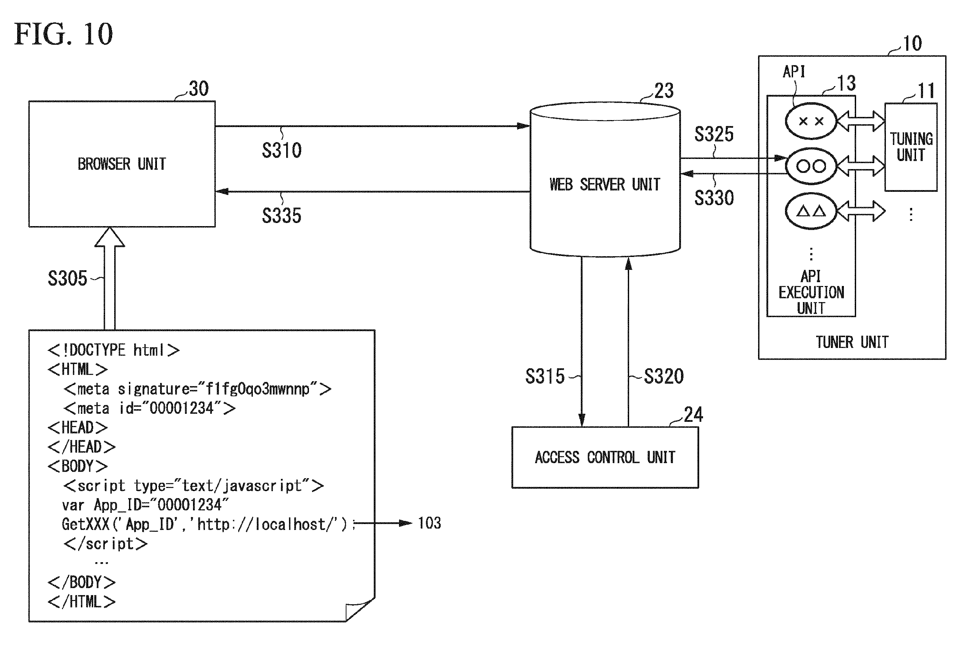

Fig. 10 is a diagram illustrating a process flow of the API access control process in the reception device 1, and illustrates a detailed process of steps S220 to S240 of Fig. 9.

The browser unit 30 reads the application from the storage place indicated by the location information set in the application start-up request and executes the application (step S305). When the browser unit 30 reads the API call instruction 103 (e.g., GetXXX('App_ID', 'http://localhost')) described in the HTML file of the application which is being executed, the browser unit 30 determines that the application which is being executed uses the API and outputs the API call instruction to the web server unit 23 according to the read description (step S310). In a protocol of the API call instruction, HTTP is used, and the API-ID of the called API, the application ID of the executed application, and the referer in which a location indicating a frame of a call instruction transmission source has been set are included.

In Fig. 10, a part "XXX" of "GetXXX" of the API call instruction indicates the API-ID, and an argument "App_ID" indicates the application ID. Further, the referer is set in an HTTP header of the API call instruction.

The web server unit 23 outputs the application ID, the API-ID and the referer set in the API call instruction to the access control unit 24 and inquires whether access to the API is permitted (step S315). The access control unit 24 determines whether the API access is permitted based on the information input from the web server unit 23, and returns a determination result to the web server unit 23 (step S320). When the web server unit 23 receives permission of the access to the API from the access control unit 24, the web server unit 23 notifies the API execution unit 13 of the API-ID and instructs execution of exchange of the API with the application (step S325). Accordingly, a functional unit (module) providing the API executes a function corresponding to the called API. A return value indicating an execution result of the API is returned to the browser unit 30 via the web server unit 23 (steps S330 and S335). Thus, the application which is being executed can access the API and use the function of the module within the reception device 1.

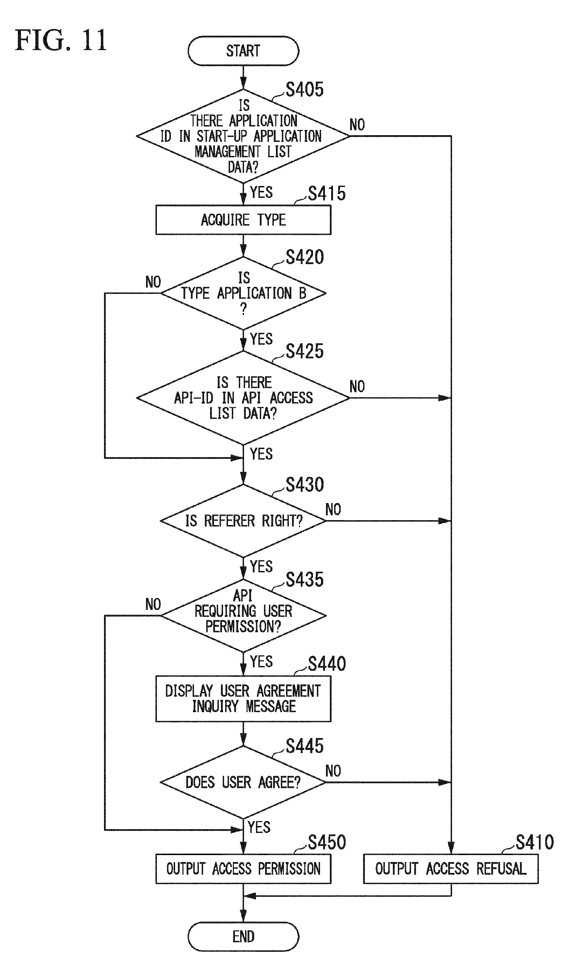

Fig. 11 is a diagram illustrating a process flow of an API access permission determination process executed in steps S315 to S320 of Fig. 10.

The access control unit 24 receives an input of the API-ID, the application ID and the referer that the web server unit 23 has acquired from the API call instruction. The ID and type confirmation unit 243 of the access control unit 24 determines whether the application ID input from the web server unit 23 has been described in the start-up application management list data stored in the start-up application management list storage unit 241 (step S405).

When the ID and type confirmation unit 243 determines that the application ID has not been described in the start-up application management list data (step S405: NO), the ID and type confirmation unit 243 outputs refusal of the access to the API to the web server unit 23 (step S410).

When the ID and type confirmation unit 243 determines that the application ID has been described in the start-up application management list data (step S405: YES), the ID and type confirmation unit 243 reads the type stored in association with the application ID from the start-up application management list data and outputs the type to the API confirmation unit 245 (step S415). When the API confirmation unit 245 determines that the type input from the ID and type confirmation unit 243 is application B (step S420: YES), the API confirmation unit 245 determines whether the API-ID input from the web server unit 23 has been described as an access permission target in the API access list data stored in the API access list storage unit 244 (step S425).

When the API confirmation unit 245 determines whether the API-ID has not been described as an access permission target in the API access list data (step S425: NO), the API confirmation unit 245 outputs refusal of the access to the API to the web server unit 23 (step S410).

When the ID and type confirmation unit 243 determines that the type is application A in step S420 (step S420: NO) or when the ID and type confirmation unit 243 determines that the API-ID has been described as an access permission target in the API access list data (step S425: YES), the referer confirmation unit 246 determines whether the access has occurred from the inside of the reception device 1 with reference to the referer input from the web server unit 23 (step S430). In other words, when the referer indicates a location of the inside of the reception device 1, the referer confirmation unit 246 determines that the access has occurred from the inside of the reception device 1. When the referer confirmation unit 246 determines that the access has occurred from a place other than the inside of the reception device 1 (step S430: NO), the referer confirmation unit 246 outputs refusal of the access to the API to the web server unit 23 (step S410).

On the other hand, when the referer confirmation unit 246 determines that the access has occurred from the inside of the reception device 1 (step S430: YES), the user permission confirmation unit 248 determines whether the API-ID input from the web server unit 23 has been described as a target requiring user permission in the user permission API list data stored in the user permission API list storage unit 247 (step S435).

When the user permission confirmation unit 248 determines that the API-ID has been described as a target requiring user permission in the user permission API list data (step S435: YES), the user permission confirmation unit 248 reads an API name corresponding to the API-ID from the user permission API list data. Further, if the user permission confirmation unit 248 reads an application name corresponding to the application ID from the start-up application management list data stored in the start-up application management list storage unit 241, the user permission confirmation unit 248 notifies the confirmation message output unit 25 of the application name together with the API name. The confirmation message output unit 25 causes the video display unit 41 to display the API name and the application name input from the user permission confirmation unit 248 and a message instructing to input whether the API access is permitted (step S440).

When an instruction indicating refusal of the API access is input by the user input unit 50 (step S445: NO), the user permission confirmation unit 248 outputs refusal of the access to the API to the web server unit 23 (step S410).

When the user permission confirmation unit 248 determines that the API-ID has not been described as a target requiring user permission in the user permission API list data in step S435 (step S435: NO) or when an instruction indicating permission of the API access is input by the user input unit 50 in step S445 (step S445: NO), the user permission confirmation unit 248 outputs permission of the access to the API to the web server unit 23 (step S450).

Further, the API access list data stored in the API access list storage unit 244 and the user permission API list data stored in the user permission API storage unit 247 may also be distributed through a broadcast signal or communication and updated. Accordingly, it is possible to cope with cases in which a broadcast provider or the like changes his or her mind about a range of an API available (permission or prohibition of API use) to the application or an available range of an API for which user permission is acquired when necessary.

Further, while the types include three types of application A, application B, and application C in the embodiment described above, the types may include two types or may include four or more types. Further, the types may indicate other types.

When use of only some APIs is permitted for a plurality of types, information indicating whether access to each API is permitted is described in association with the types in the API access list data. Also, in steps S420 to S425 of Fig. 11, it is determined whether the API-ID has been described in the API access list data as an access permission target to correspond to a type for which use of some APIs is permitted.

Further, while the application manager unit 21 writes the application determined to be application C to the application storage unit 231 in step S140 of Fig. 8 in the embodiment described above, the application determined to be application C may be discarded instead of being stored.

As described above, the application with the signature and the application ID is the application authorized by the third party. On the other hand, an application not authorized by the third party is an informal application and has neither the application ID nor the signature. When the reception device 1 verifies the signature using the application ID set in the application and determines the type at the time of acquisition of the application, the reception device 1 stores the determined type in association with the application. Further, as described above, when the authorized application is executed by the browser unit 30 and attempts to access the API based on the instruction from the user or the broadcast, the API-ID and the application ID are output from the browser unit 30 to the web server unit 23 through HTTP. The access control unit 24 determines whether use of the API identified by the API-ID from the application identified by the application ID is permitted.

The access control unit 24 determines whether the access to the API that the application calls to use the function of the reception device 1 is permitted based on whether the application is an application which is being executed in the reception device 1, whether the type is a type for which the API use has been permitted, whether a location of a call source is right, whether the user has permitted the API use, or the like. The web server unit 23 performs control to permit or prohibit the call of the function of each module using the API from the application according to a result of a determination of the access control unit 24 as to whether the access is possible.

Accordingly, it is possible to precisely determine permission or prohibition of the API use according to reliability (a possibility that the user of the reception device 1 is not disadvantaged) of the application. For example, applications other than the formal application can be prevented from using the API which acquires information for identifying a personal preference such as a channel watched by the user, an API which controls the functional unit of the reception device 1, or the like. Thus, improvement of safety in application use of the user is expected.

Further, since the list such as the API access list data or the user permission API list data is used, it is possible to flexibly control permission or prohibition of the API access from the application executed in the reception device 1 (receiver). Thus, even in an environment in which a large number of APIs are disclosed and a variety of applications are produced, there is an effect in that a risk of security threat to users and contents can be reduced.

The reception device 1, the broadcast transmission device 7, and the application distribution device 8 described above include a computer system provided therein. Also, the above process is performed by a procedure of operations of the resident unit 20 and the browser unit 30 of the reception device 1, the broadcast transmission device 7, and the application distribution device 8 being stored in a computer-readable recording medium in the form of a program and this program being read and executed by the computer system. The computer system stated herein includes a CPU, various memories, an OS, and hardware such as peripheral devices.

Further, the "computer system" also includes a homepage providing environment (or display environment) if a WWW system is being used.

Further, the "computer-readable recording medium" refers to a storage unit, such as a flexible disk, a magnetic optical disc, a ROM, a portable medium such as a CD-ROM, or a hard disk built in the computer system. Further, the "computer-readable recording medium" also includes a recording medium which dynamically holds a program for a short time, such as a communication wire when a program is transmitted via a network such as the Internet or a communication line such as a telephone line, or a recording medium which holds a program for a predetermined time, such as a volatile memory inside the computer system including a server and a client in such a case. Further, the program may be a program for realizing some of the above-described functions or may be a program capable of realizing the above-described functions through a combination with a program previously stored in the computer system.

### [Industrial Applicability]

The present invention is applicable to a reception device, a program and a reception method which limits APIs whose use is to be permitted according to applications.

### [Reference Symbols]

- 1: reception device
- 10: tuner unit
- 11: tuning unit
- 12: broadcast contents acquisition unit
- 13: API execution unit
- 20: resident unit
- 21: application manager unit
- 211: application storage unit
- 22: signature verification unit
- 23: web server unit
- 231: application storage unit
- 24: access control unit
- 241: start-up application management list storage unit
- 242: start-up application management unit
- 243: ID and type confirmation unit
- 244: API access list storage unit
- 245: API confirmation unit
- 246: referer confirmation unit
- 247: user permission API list storage unit
- 248: user permission confirmation unit
- 25: confirmation message output unit
- 30: browser unit
- 40: output unit
- 41: video display unit
- 42: audio output unit
- 50: user input unit
- 7: broadcast transmission device
- 8: application distribution device
- 9: communication network

## Claims

1. A reception device comprising:
a functional unit configured to perform at least one of control of reception of a broadcast signal and process on a received broadcast signal;
an application storage unit which stores an application described using a describing language for web contents, application identification information which identifies the application, and a type of application in association;
a browser unit configured to read the application from the application storage unit, execute the application, and output, through a protocol used between a web server and a client, a call instruction for an application programming interface in which the application identification information of the application and application programming interface identification information for identifying the application programming interface have been set when call of the application programming interface for using a function of the functional unit has been described in the executed application;
an access control unit configured to determine whether access to the application programming interface is permitted based on a determination according to the type stored in the application storage unit to correspond to the application identification information set in the call instruction; and
a web server unit configured to receive the call instruction from the browser unit, inquire of the access control unit about whether access to the application programming interface is permitted, and control the call instruction according to a result of a determination which is made by the access control unit in response to the inquiry.

2. The reception device according to claim 1, wherein the access control unit is configured to refuse the access to the application programming interface when location information set as a call source in the call instruction indicates a device other than the reception device.

3. The reception device according to claim 1, further comprising:
a start-up application management list storage unit which stores application identification information and a type of an application which has started up; and
a start-up application management unit configured to write the application identification information and the type of the application which has started up in the browser unit to the start-up application management list storage unit,
wherein the access control unit is configured to refuse the access to the application programming interface when the application identification information set in the call instruction has not been stored in the start-up application management list storage unit.

4. The reception device according to claim 1, further comprising:
a video display unit configured to display a video; and
a confirmation message output unit configured to cause the video display unit to display a message instructing to input whether use of the application programming interface is permitted when the application programming interface requires user permission,
wherein the access control unit is configured to refuse the access to the application programming interface when an indication indicating that the use is not permitted is input in response to the message.

5. The reception device according to claim 1, further comprising:
an application manager unit configured to acquire the application; and
a signature verification unit configured to verify a signature set in the application acquired by the application manager unit, and determine the type based on whether the verification is successful and based on the application identification information set in the application,
wherein the application manager unit is configured to write the application identification information and the type determined by the signature verification unit to the application storage unit in association with the acquired application.

6. The reception device according to claim 1, wherein:
the describing language is Hypertext Markup Language, and
the protocol is Hypertext Transfer Protocol.

7. A program which causes a computer used in a reception device including a functional unit which performs at least one of control of reception of a broadcast signal and process on the received broadcast signal to function as:
an application storage unit which stores an application described using a describing language for web contents, application identification information which identifies the application, and a type of application in association;
a browser unit which configured to read the application from the application storage unit, execute the application, and output, through a protocol used between a web server and a client, a call instruction for an application programming interface in which the application identification information of the application and application programming interface identification information for identifying the application programming interface have been set when call of the application programming interface for using a function of the functional unit has been described in the executed application;
an access control unit configured to determine whether access to the application programming interface is permitted based on a determination according to the type stored in the application storage unit to correspond to the application identification information set in the call instruction; and
a web server unit configured to receive the call instruction from the browser unit, inquire of the access control unit about whether access to the application programming interface is permitted, and control the call instruction according to a result of a determination which is made by the access control unit in response to the inquiry.

8. A reception method comprising:
performing at least one of control of reception of a broadcast signal and process on a received broadcast signal;
storing an application described using a describing language for web contents, application identification information which identifies the application, and a type of application in association;
reading the application from the application storage unit, executing the application, and outputting, through a protocol used between a web server and a client, a call instruction for an application programming interface in which the application identification information of the application and application programming interface identification information for identifying the application programming interface have been set when call of the application programming interface for using a function of the functional unit has been described in the executed application;
determining whether access to the application programming interface is permitted based on a determination according to the type stored in the application storage unit to correspond to the application identification information set in the call instruction; and
receiving the call instruction, inquiring about whether access to the application programming interface is permitted, and controlling the call instruction according to a result of a determination corresponding to the inquiry.
